# EUROPÄISCHE PATENTANMELDUNG

(11) **EP 2 078 897 A2**
(43) Veröffentlichungstag der Anmeldung: **15.07.2009**
(21) Anmeldenummer: 09450001.4
(22) Anmeldetag: 02.01.2009
(51) Int. Cl.: F23K 3/00

(54) **Austragungssystem**

(30) Priorität: 10.01.2008 AT 1708 U
(71) Anmelder: KWB - Kraft und Wärme aus Biomasse Gesellschaft m.b.H., 8321 St. Margarethen/Raab (AT)
(72) Erfinder: Ambros, Stefan, 8120 Regau (AT); Salmhofer, Manfred, 8211 Grosspesendorf (AT); Flitsch, Manfred, 8082 Kirchbach (AT); Rath, Richard, 8322 Studenzen (AT)
(74) Vertreter: Gibler & Poth Patentanwälte OEG

(57) **Zusammenfassung**

Bei einem Austragungssystem (1) zur Förderung von Biomasse aus einem Lagerraum (2) in eine Biomassefeuerung, wobei das Austragungssystem (1) ein Rührwerk (3), mit einer Hauptdrehachse (31), zur wenigstens bereichsweise bodennahen Anordnung umfasst, wird zur bauraumschonenden und kostenschonenden Ausbildung des Lagerraums (2) vorgeschlagen, dass die Hauptdrehachse (31) des Rührwerkes (3) im Wesentlichen lotrecht angeordnet ist, und dass - in Gebrauchslage des Austragungssystems (1) gesehen - unter dem Rührwerk (3) eine Förderschnecke (4) im Wesentlichen freiliegend, und insbesondere im Wesentlichen waagrecht, angeordnet ist.

## Beschreibung

Die Erfindung betrifft ein Austragungssystem gemäß dem Oberbegriff des Anspruches 1.

Austragungssysteme zur Verwendung für Biomassefeuerungsanlagen sind in verschiedenen Ausführungsformen bekannt, wobei vom Austragungssystem die Biomasse aus dem Lagerraum in die Biomassefeuerung, also den Heizkessel, gefördert wird. Die Biomasse kann dabei als Holzschnitzel, als Hackschnitzel, als Pellet und/oder als Granulat vorliegen.

Biomassefeuerungen werden verstärkt zum Heizen von Gebäuden, insbesondere von Ein- oder Mehrfamilienhäusern oder von gewerblich genutzten Gebäuden, verwendet und stellen eine umweltfreundliche und/oder kostengünstige Alternative zur Verfeuerung von Öl oder Gas dar.

Moderne automatische Biomassefeuerungen sind mit Austragungssystemen, welche auch als Fördersysteme bezeichnet werden, kombiniert, die das Heizmaterial vollautomatisch, vorzugsweise aus einem Jahreslagerraum zur Lagerung des Jahresverbrauchs der Biomasse, zur Biomassefeuerung transportieren.

Es sind Austragungssysteme bekannt, welche konstruktionsbedingt schräge Auskleidungen der Lagerräume erfordern. Über diese schrägen Auskleidungen kann das Heizmaterial zum Austragungssystem fließen und/oder rutschen, wo es dann über Förderschnecken, Saugsonden oder Ähnlichem ausgebracht und der Biomassefeuerung zugeführt wird. Naturgemäß wird durch die schrägen Auskleidungen ein relativ großer Raum im Lagerraum eingenommen, der vom Benutzer nicht zur Lagerung von Biomasse genutzt werden kann, also einen Leerraum oder Totraum im Lagerraum ausbildet, wobei das im Lagerraum verfügbare Brutto-Lagerraumvolumen wesentlich verringert wird. Die schrägen Auskleidungen erzeugen in der Herstellung auch erhebliche Zusatzkosten.

Nachteilig bei diesen bekannten Austragungssystemen ist, dass diese nur einen wesentlich geringeren Teil als des Brutto-Lagerraumvolumens des Lagerraums austragen können und somit das vom Benutzer zur Lagerung von Biomasse nutzbare Netto-Lagerraumvolumen des Lagerraums deutlich niedriger - oftmals bis zu 40 Prozent geringer - als das Brutto-Lagerraumvolumen des Lagerraums ist.

Bekannte mechanische Austragungssysteme umfassen eine Förderschnecke und einen im Lagerraum ausgebildeten Förderschneckenkanal zur bereichsweisen Umschließung der Förderschnecke. Nachteilig dabei ist, dass der Förderschneckenkanal beim Betrieb zum Verstopfen neigt, womit die Förderung der Biomasse beeinträchtig ist. Um dies zu vermeiden müssen bei bekannten Austragungssystemen üblicherweise die Geometrie der Förderschnecke und des Förderschneckenkanals auf die Geometrie der Biomasse und/oder des Lagerraums abgestimmt sein, wobei üblicherweise als Förderschnecke und/oder als Förderschneckenkanal Einzelanfertigungen zu verwenden sind. Die Einzelanfertigungen erhöhen jedoch die Herstellungskosten und machen eine Vor-Ort-Korrektur der Förderschnecke und/oder des Förderschneckenkanal schwierig oder unmöglich.

Aufgabe der Erfindung ist es daher ein Austragungssystem der eingangs genannten Art anzugeben, mit welchem die genannten Nachteile vermieden werden können, mit welchem der Totraum des Lagerraums gering ausgebildet sein kann und welches die bauraumschonende und kostenschonende Ausbildung des Lagerraums gewährleisten kann.

Erfindungsgemäß wird dies durch die Merkmale des Anspruches 1 erreicht.

Durch die Kreisbewegung des Rührwerkes wird das Heizmaterial kreisförmig in Richtung einer Förderschnecke befördert, wobei dadurch dass das Rührwerk möglichst tief, also in Bodennähe zu einem Lagerraumboden, im Lagerraum montiert ist, eine größtmögliche Entleerung des Lagerraums erfolgt.

Dabei ergibt sich der Vorteil, dass der Lagerraum zu einem hohen Teil entleerbar ist, womit der Totraum gering ausgebildet ist und womit das nutzbare Netto-Lagerraumvolumen im Bereich des Brutto-Lagerraumvolumens gewährleistet sein kann. In diesem Zusammenhang sind das Brutto-Lagerraumvolumen als das Innenvolumen des Lagerraums, also das Volumen zwischen dem Lagerraumboden, den Lagerraumseitenwänden und der Lagerraumdecke, und das Netto- Lagerraumvolumen als das austragbare Volumen des Lagerraums, also die Volumendifferenz der Biomasse zwischen vollständig befülltem Lagerraum und vollständig entleertem Lagerraum, definiert, wobei sich das Netto- Lagerraumvolumen und der Totraum im Lagerraum zum Brutto-Lagerraumvolumen addieren.

Vorteilhaft dabei ist, dass der Austrag der Biomasse einfach, gleichmäßig und unabhängig von dem Füllgrad des Lagerraums ausgebildet sein kann, womit die Steuerung des Austrages und die Befüllung des Brennraumes der Biomassefeuerung mit der Biomasse vereinfacht werden kann und womit ein Verstopfen des Austragungssystems mit hoher Zuverlässigkeit verhindert sein kann.

Dadurch dass die Förderschnecke - in der Gebrauchslage des Austragungssystems gesehen - im Wesentlichen freiliegend ausgebildet ist, kann die Förderschnecke ohne einem Förderschneckenkanal im Lagerraum, also innerhalb des Lagerraums im Wesentlichen förderschneckenkanalfrei, ausgebildet sein. In diesem Zusammenhang bedeutet die im Wesentlichen förderschneckenkanalfreie Anordnung der Förderschnecke, dass die Förderschnecke - in der Betriebslage des Austragungssystems im Lagerraum - nach oben zum Rührwerk und nach unten zum Lagerraumboden benachbart und seitlich freiliegend, also insbesondere ohne einen den Umfang der Förderschnecke bereichsweise umschließenden Förderschneckenkanal und ohne eine seitlich benachbart zur Förderschnecke ausgebildete schräge Fläche, angeordnet ist. Dabei kann zwischen der Förderschnecke und den Lagerraumseitenwänden zur Lagerung der Biomasse nutzbares Lagerraumvolumen ausgebildet sein und das Netto-Lagerraumvolumen hoch sein.

Vorteilhaft dabei ist, dass ein Übermaß an geförderter Biomasse - in der Betriebslage der auf den Lagerraum gesehen - in Richtung seitlich der Förderschnecke, aus dem Wirkbereich der Förderschnecke heraus abgleiten kann und Verstopfungen eines herkömmlicherweise ausgebildetem Förderschneckenkanals im Lagerraum vermieden werden können. Dabei muss die Geometrie der Förderschnecke nicht - wie herkömmlicherweise üblich - auf den Förderschneckenkanal abgestimmt sein, womit als Förderschnecke eine Standardförderschnecke ausgebildet sein kann. Vorteilhaft dabei ist, dass dabei auf Einzelanfertigungen von Förderschnecken verzichtet werden kann und somit die Kosten der Herstellung der Förderschnecke gering sind. Vorteilhaft dabei ist ebenso, dass die als Standardförderschnecke ausgebildete Förderschnecke mit vorbestimmter Überlänge zum Bestimmungsort angeliefert werden kann und Vor-Ort auf die Einbaulänge abgelängt werden kann. Dadurch können Abweichungen der tatsächlichen Lagerraumabmessungen von den planmäßigen Lagerraumabmessungen ausgeglichen und somit verhindert werden, dass eine Förderschnecke mit planmäßige vorfabrizierter Länge nachträglich nachgebessert, längenkorrigiert oder ausgetauscht werden muss.

Die Erfindung betrifft auch eine Lagereinrichtung zur Lagerung von Biomasse zur Befeuerung einer Biomassefeuerung umfassend das erfindungsgemäße Austragungssystem.

Diese Lagereinrichtung ermöglicht die oben genannten Vorteile und vorteilhaften Wirkungen.

Die Erfindung betrifft weiters ein Verfahren zur Förderung von Biomasse aus einem Lagerraum gemäß dem Oberbegriff des Anspruches 13.

Aufgabe des Verfahrens ist es ein Verfahren zur Förderung von Biomasse aus einem Lagerraum derart weiterzubilden, dass die eingangs genannten Nachteile vermieden werden können, dass der Totraum des Lagerraums gering sein kann und dass die bauraumschonende und kostenschonende Ausbildung des Lagerraums gewährleistet sein kann.

Erfindungsgemäß wird dies durch die Merkmale des Anspruches 13 erreicht.

Das erfindungsgemäße Verfahren ermöglicht bei dem Austragungssystem und/oder bei der Lagereinrichtung die oben genannten Vorteile und vorteilhaften Wirkungen.

Die Unteransprüche, welche ebenso wie die Ansprüche 1 und 13 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 Teile der Lagereinrichtung mit Teilen des Austragungssystems einer ersten bevorzugten Ausführungsform in einer Seitenansicht, wobei das Austragungssystem in einem Lagerraum in Bodennähe und im Wesentlichen waagrecht ausgebildet ist und wobei das Austragungssystem das Rührwerk, die Förderschnecke, einen Förderkanal und eine Saugfördervorrichtung umfasst;
Fig. 2 die Teile der Lagereinrichtung mit den Teilen des Austragungssystems gemäß Fig. 1 in einer Sicht von oben auf den im Wesentlichen quadratischen Lagerraum, auf das Rührwerk und auf den Lagerraumboden;
Fig. 3 Teile der Lagereinrichtung mit Teilen des Austragungssystems einer zweiten bevorzugten Ausführungsform in einer Seitenansicht, wobei das Austragungssystem in einem Lagerraum in Bodennähe und im Wesentlichen waagrecht ausgebildet ist und wobei das Austragungssystem das Rührwerk, die Förderschnecke, den Förderkanal und eine Knickschneckenfördervorrichtung umfasst; und
Fig. 4 die Teile der Lagereinrichtung mit den Teilen des Austragungssystems gemäß Fig. 3 in einer Sicht von oben auf den im Wesentlichen quadratischen Lagerraum, auf das Rührwerk und auf den Lagerraumboden.

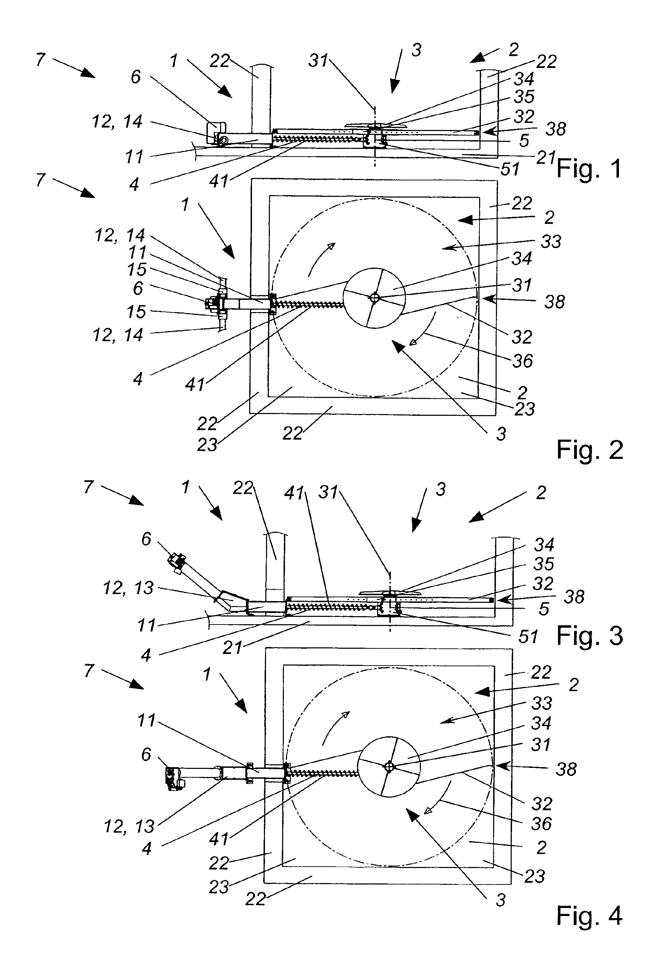

Die Fig. 1 bis 4 zeigen ein Austragungssystem 1 zur Förderung von Biomasse aus einem Lagerraum 2 in eine Biomassefeuerung, wobei das Austragungssystem 1 ein Rührwerk 3, mit einer Hauptdrehachse 31, zur wenigstens bereichsweise bodennahen Anordnung umfasst, wobei die Hauptdrehachse 31 des Rührwerkes 3 im Wesentlichen lotrecht angeordnet ist, wobei die Hauptdrehachse 31 des Rührwerkes 3 im Wesentlichen lotrecht angeordnet ist, und dass - in Gebrauchslage des Austragungssystems 1 gesehen - unter dem Rührwerk 3 eine Förderschnecke 4 wenigstens in Richtung einer im Wesentlichen horizontalen Ebene freiliegend angeordnet ist, wie dies in Fig. 1 bis 4 dargestellt ist.

Die im Wesentlichen lotrecht angeordnete Hauptdrehachse 31 des Rührwerkes 3 ist dabei innerhalb von 5°, insbesondere innerhalb von 3°, bevorzugt innerhalb von 2°, zu einer Lotrechten orientiert, womit ein im Wesentlichen waagrechtes Wirken des Rührwerks 3 gewährleistet ist, womit das Rührwerk 3 bevorzugt in einer im Wesentlichen waagrechten Ebene und/oder flachen Scheibe rotiert. Die im Wesentlichen horizontale Ebene ist dabei insbesondere im Wesentlichen lotrecht zur Hauptdrehachse 31 angeordnet.

Insbesondere kann ein Lagerraumboden 21 im Wesentlichen als horizontale Bodenfläche des Lagerraums 2 ausgebildet sein. Hiebei kann die Hauptdrehachse 31 im Wesentlichen lotrecht zum Lagerraumboden 21 angeordnet sein, wie dies in Fig. 1 bis 4 dargestellt ist.

In vorteilhafter Weiterbildung kann vorgesehen sein, dass - in Gebrauchslage des Austragungssystems 1 gesehen - unter dem Rührwerk 3 eine Förderschnecke 4, insbesondere im Wesentlichen waagrecht, angeordnet ist, wobei die Förderschnecke 4 zur Förderung der Biomasse aus dem Lagerraum 2 vorgesehen ist.

Die bevorzugten Austragungssysteme 1, insbesondere der ersten und zweiten bevorzugten Ausführungsform, ermöglichen ein Verfahren zur Förderung von Biomasse in eine Biomassefeuerung aus dem Lagerraum 2, dass die Biomasse im Lagerraum 2 über der Förderschnecke 4 mittels eines, im Wesentlichen waagrecht wirkenden und zumindest bereichsweise bodennah zu dem Lagerraumboden 21 ausgebildeten, Rührwerks 3 bewegt wird und wobei die Biomasse mittels einer, im Lagerraum 2 zwischen dem Rührwerk 3 und dem Lagerraumboden 21, insbesondere im Wesentlichen waagrecht, angeordneten sowie in Richtung einer im Wesentlichen horizontalen Ebene freiliegenden, Förderschnecke 4 aus dem Lagerraum 2 ausgetragen wird.

Die Austragungssysteme 1 gemäß der ersten und zweiten bevorzugten Ausführungsform, sowie - nicht dargestellte - weitere bevorzugte und/oder vorteilhafte Ausführungsformen, welche sich aus der Beschreibung und/oder aus Kombination verschiedener vorteilhafter und/oder bevorzugter Ausführungsformen ergeben, sowie das vorteilhafte Verfahren zur Förderung von Biomasse in eine Biomassefeuerung aus einem Lagerraum 2 ermöglichen die eingangs beschriebenen Vorteile und vorteilhaften Wirkungen.

Das Austragungssystem 1 und der Lagerraum 2 zusammen bilden eine Lagereinrichtung 7 zur Lagerung von Biomasse für die Befeuerung der Biomassefeuerung aus. Die Lagereinrichtung 7 und die Biomassefeuerung zusammen bilden die Biomassefeuerungsanlage.

Biomassefeuerungen und Biomassefeuerungsanlagen werden verstärkt zum Heizen von Gebäuden, insbesondere von Ein- oder Mehrfamilienhäusern oder von gewerblich genutzten Gebäuden verwendet.

Für den Betreiber der Biomassefeuerungsanlage ist eine größtmögliche Nutzung des Brutto-Lagerraumvolumens sehr wichtig, um in möglichst kleinen Lagerräumen - idealerweise - die Gesamtjahresmenge an Heizmaterial, also an Biomasse, lagern zu können.

Vorteilhaft bei dem erfindungsgemäßen Austragungssystem 1 ist, dass das Brutto-Lagerraumvolumen gut, insbesondere zu einem prozentuell hohen Anteil, genutzt werden kann. Vorteilhaft dabei ist, dass der Lagerraum 2 einfach, gleichmäßig und kostengünstig entleert werden kann. Vorteilhaft dabei ist, dass eine Lagereinrichtung 7 umfassend den Lagerraum 2 und das Austragungssystem 1 kostengünstig und bauraumschonend aufgebaut werden kann. Vorteilhaft dabei ist, dass der Großteil der beweglichen Teile der Lagereinrichtung 7, bei einem Versagen eines Teiles dieser, von außerhalb des Lagerraums 2 und bei einem befüllten Lagerraum 2 ausgetauscht werden können.

In vorteilhafter Weiterbildung kann vorgesehen sein, dass die Förderschnecke 4 und das Rührwerk 3 mittels eines Winkelgetriebes 5 wirkverbunden sind. Dadurch können die Förderschnecke 4 und das Rührwerk 3 einfach und kostengünstig mittels eines gemeinsamen Antriebs angetrieben werden. Dabei können die Förderschnecke 4 bevorzugt im Wesentlichen um eine horizontale Achse, also um bis zu plus/minus 5°, insbesondere 3°, bevorzugt 2°, um die horizontale Achse, und das Rührwerk 3 im Wesentlichen lotrecht, also um bis zu plus/minus 5°, insbesondere 3°, bevorzugt 2°, um eine vertikale Achse, rotieren.

Ebenso vorteilhafterweise kann das Rührwerk 3 an dem Winkelgetriebe 5 gelagert und mittels der Förderschnecke 4 antreibbar sein. Dadurch können die Förderschnecke 4 und das Rührwerk 3 einfach und kostengünstig mittels eines gemeinsamen Antriebs angetrieben werden.

Insbesondere kann vorgesehen sein, dass die Förderschnecke 4 und das Rührwerk 3 mittels eines Winkelgetriebes 5 wirkverbunden sind, und dass das Rührwerk 3 an dem Winkelgetriebe 5 gelagert ist und mittels der Förderschnecke 4 antreibbar ist.

Bevorzugt kann vorgesehen sein, dass ein Gehäuse 51 des Winkelgetriebes 5 zur zumindest bereichsweise bodennahen Anordnung des Rührwerkes 3 und zur Rotation des Rührwerkes 3 um die im Wesentlichen lotrechte Hauptdrehachse 31, insbesondere in die Rührwerksrotationsrichtung 36, ausgebildet ist. Dadurch kann das Rührwerk 3 mittels des Gehäuses 51 bodennah und lagefest im Lagerraum 2 angeordnet werden, womit der Aufbau und der Platzbedarf zur Anordnung des Rührwerks 3 im Lagerraum 2 gering sein kann.

Besonders bevorzugt kann vorgesehen sein, dass das Rührwerk 3 zumindest einen Rührwerksarm 32 aufweist. Dadurch kann die Biomasse einfach und gleichmäßig gefördert werden.

In diesem Zusammenhang kann vorgesehen sein, dass der zumindest eine Rührwerksarm 32 als Federblatt ausgebildet ist.

Ebenso kann im Zusammenhang mit dem Rührwerksarm 32 vorgesehen sein, dass der zumindest eine Rührwerksarm 32 als federzugbetätigter Gelenkarm ausgebildet ist.

Insbesondere kann - wenn zumindest zwei Rührwerksarme 32 vorgesehen sind - vorgesehen sein, dass zumindest einer der Rührwerksarme 32 als Federblatt und zumindest einer der Rührwerksarme 32 als federzugbetätigter Gelenkarm ausgebildet sind.

In sämtlichen Fällen, in welchen der zumindest eine Rührwerksarm 32 als Federblatt und/oder als federzugbetätigter Gelenkarm ausgebildet ist, kann dadurch der Rührwerksarm 32 in Abhängigkeit einer Gewichtsbelastung, welche sich aufgrund des Füllstandes, insbesondere des Füllgrades, des Lagerraumes ergibt, komplett eingefahren und/oder angelegt oder teilweise bzw. vollständig ausgefahren und/oder ausgeklappt sein, wobei sich das Federblatt selbst verformt bzw. wobei der federzugbetätigte Gelenksarm mit zumindest einem Gelenk gelenkig und/oder faltbar zusammenfaltbar ist und die Verformung zum Ausfahren und/oder Ausklappen sowie zum Einklappen und/oder zum Einfahren des federzugbetätigten Gelenksarms federzugbetätigt erfolgt.

Im eingefahrenen und/oder angelegten Zustand des Rührwerksarmes 32 überstreicht der Rührwerksarm 32 bei einer kompletten Rotation, also bei zumindest einer vollständigen Umdrehung, um die Hauptdrehachse 31 des Rührwerkes 3 lediglich eine kleine Fläche, womit lediglich wenig Biomasse vom Rührwerk 3 gerührt werden. Die Hauptdrehachse 31 ist im Wesentlichen zentralsymmetrisch im Rührwerksarm 32 angeordnet und kann vorteilhafterweise zentralsymmetrisch in Bezug auf den Lagerraum 2 angeordnet sein. Derart kann das Rührwerk 3 in Bodennähe und - in Aufsicht gesehen - im Zentrum des Lagerraumbodens 21 ausgebildet sein.

Im ausgefahrenen und/oder ausgeklappten Zustand des Rührwerkes 32 überstreicht der Rührwerksarm 32 bei einer kompletten Rotation um die Hauptdrehachse 31 des Rührwerkes lediglich eine große Fläche 33, insbesondere die maximal mögliche große Fläche 33, womit viel Biomasse vom Rührwerk 3 gerührt wird. Dabei kann der bevorzugt als federzugbetätigter Gelenkarm oder als Federblatt ausgebildete Rührwerksarm 32 bei einer vollständigen Rotation eine gewichtsbelastungsabhängig vorgebbare Fläche überstreichen, wobei bei einer geringen Gewichtsbelastung des Rührwerksarmes 32 dieser eine große Fläche 33 und bei einer großen Gewichtsbelastung des Rührwerksarmes 32 dieser eine kleine Fläche überstreicht.

Vorteilhaft dabei ist, dass das Rührwerk 3 bei gefülltem Lagerraum 3 wenig Biomasse rührt und/oder bewegt, womit der Antrieb des Rührwerks 3 wenig belastet wird, womit der Antrieb wenig Energie benötigt und womit die Biomasse nicht unnötig bewegt, geschert und/oder zerrieben wird. Vorteilhaft dabei ist, dass das Rührwerk 3 bei kaum gefülltem Lagerraum 2 viel Biomasse rührt und/oder bewegt, womit sichergestellt sein kann, dass Biomasse mit der Förderschraube 4 kontaktiert wird und derart die Förderschraube 4 die Biomasse aus dem Lagerraum austrägt, also hinausfördert.

Bei einer - nicht dargestellten - bevorzugten Ausführungsform des Austragungssystems 1 kann vorgesehen sein, dass das Rührwerk 3 durch einen eigenen Antrieb, insbesondere unabhängig von der Förderschnecke 4, angetrieben wird. Dabei kann vorteilhafterweise vorgesehen sein, dass die Rotation des Rührwerks 3 gewichtsabhängig, insbesondere lagerfüllstandsabhängig, gesteuert wird, wobei sich der eigene Antrieb lediglich einschaltet, wenn ein Kontakt der Biomasse mit der Förderschnecke 4 ohne der Rotation des Rührwerks 3 nicht zuverlässig gewährleistet sein kann.

Das Rührwerk 3 kann bei einer weiteren bevorzugten Ausführungsform des Austragungssystems 1 zwei - insbesondere einander gegenüberliegende - Rührwerksarme 32 umfassen.

Das Rührwerk 3 kann bei einer weiteren bevorzugten Ausführungsform des Austragungssystems 1 drei, vier oder mehr - insbesondere gleichmäßig um den Umfang des Rührwerks 3 angeordnete - Rührwerksarme 32 umfassen.

Vorteilhafterweise kann vorgesehen sein, dass - in Gebrauchslage des Austragungssystems 1 gesehen - der vertikale Abstand einer Unterkante des Rührwerkarmes 32 zur Unterkante des Gehäuses 51 des Winkelgetriebes 5 das 1,1fache bis 3fache, insbesondere das 1,2fache bis 2,4fache, bevorzugt das 1,3fache bis 1,8fache des Außendurchmessers 41 der Förderschnecke 4 beträgt. Dadurch kann gewährleistet sein, dass das Rührwerk zumindest bereichsweise benachbart zu einem Lagerraumboden 21 des Lagerraumes 2, also bodennah, angeordnet ist, womit der Lagerraum besonders gut entleert werden kann. Dabei kann insbesondere auf die Ausbildung von schrägen Auskleidungen und/oder Rutschflächen zum Abrutschen der Biomasse verzichtet werden. Dadurch kann ein Totraum im Lagerraum 2, also ein vom Benutzer nicht zur Lagerung von Biomasse nutzbarer Teil des Lagerraums 2, gering sein und die Lagereinrichtung 7 kann kostenschonend und bauraumschonend ausgebildet sein. Insbesondere kann dabei vorgesehen sein, dass der Vertikalabstand der Förderschnecke 4 zum Rührwerkarm 32 und zum Lagerraumboden 21 im Wesentlichen gleich ist, wobei die Förderschnecke 4 im Wesentlichen mittig zwischen dem Rührwerkarm 32 und dem Lagerraumboden 21 angeordnet ist.

Vorteilhafterweise umfasst das Austragungssystem 1 einen ersten Motor 6 zum Antreiben des Rührwerks 3, wobei der erste Motor 6 den Antrieb des Rührwerks 3 ausbildet.

Insbesondere kann der erste Motor 6 auch den Antrieb weiterer beweglicher Teile des Austragungssystems 1 ausbilden.

Insbesondere kann vorgesehen sein, dass der erste Motor 6 zur Anordnung außerhalb des Lagerraums 2 vorgesehen ist und dass der erste Motor 6, die Förderschnecke 4 und das Winkelgetriebe 5 zum Übertragen des Drehmomentes des ersten Motors 6 auf das Rührwerk 3 miteinander wirkverbunden sind. Dadurch ist der Motor außerhalb Lagerraums 2 zugänglich, kann einfach gekühlt werden und muss nicht vor eindringender Biomasse, Biomasseteilen und/oder Biomassestaub geschützt werden.

Zur einfachen Gesamtförderung der Biomasse vom Lagerraum 2 in die Biomassefeuerung kann bevorzugt vorgesehen sein, dass das Austragungssystem 1 wenigstens einen Förderkanal 11, zur bereichsweisen Aufnahme der Förderschnecke 4, und eine, vorzugsweise als Knickschneckenfördervorrichtung 13 und/oder als Saugfördervorrichtung 14, ausgebildete Fördereinrichtung 12 umfasst, womit die Biomasse zuverlässig von der Förderschnecke 4 zu dem Förderkanal 11, vom Förderkanal 11 zu einer Fördereinrichtung 12 und von der Fördereinrichtung 12 in die Biomassefeuerung gefördert werden kann.

Der Förderkanal 11 bildet dabei einen Durchbruch im Bereich einer Lagerraumseitenwand 22 und verbindet die innenseitig im Lagerraum 2 angeordneten Teile des Austragungssystems 1 mit den außenseitig zum Lagerraum 2 angeordneten Teilen des Austragungssystems 1.

Die Saugfördereinrichtung 14 kann insbesondere unmittelbar an den Förderkanal 11 angeschlossen sein, wobei dieser Anschluss mittels mindestens einen, bevorzugt zwei, Saugrohranschluss 15 erfolgt, womit die Biomasse mittels mindestens einem, bevorzugt zwei, Saugrohr weiter zur Biomassefeuerung förderbar ist.

Bei einer vorteilhaften Ausführungsform des Austragungssystems 1 können die Saugfördereinrichtung 14 mit einem zweiten Antrieb und die Förderschnecke 4 und das Rührwerk 3 mit einem ersten Antrieb, insbesondere mit dem ersten Motor 6, insbesondere unabhängig voneinander steuerbar, angetrieben werden.

Die Knickschneckenfördervorrichtung 13 kann insbesondere unmittelbar mit dem Förderkanal 11 wirkverbunden sein und kann insbesondere mittels dem ersten Motor 6 angetrieben werden. Dadurch kann das gesamte Austragungssystem 1 durch einen gemeinsamen Motor, den ersten Motor 6, angetrieben werden, womit Kosten und Bauraum für weitere Motoren gespart werden können.

Bei einer weiteren vorteilhaften Ausführungsform des Austragungssystems 1 kann die Knickschneckenfördervorrichtung 13 mit einem separaten Motor angetrieben werden.

Dabei können die außerhalb, also außenseitig, des Lagerraums 2 angeordneten Teile des Austragungssystems 1 insbesondere vorbekannt ausgebildet sein. Damit können auch bestehende Lagereinrichtungen einfach und kostengünstig mittels des Rührwerks 3, insbesondere mittels des Rührwerks 3 und der Förderschnecke 4, adaptiert werden, womit bei gleich bleibendem Brutto-Lagerraumvolumen das Netto-Lagerraumvolumen erhöht werden kann. Dadurch können größere Einzelgesamtmengen an Biomasse eingelagert werden, womit der Kaufpreis pro Masseneinheit und/oder pro Volumeneinheit der Biomasse sinken kann und womit die Heizkosten gesenkt werden können. Hiezu sind lediglich Umbauarbeiten an den im Wesentlichen im Inneren des Lagerraums 2 angeordneten Teilen des Austragungssystems 1 und am Lagerraum 2 selbst nötig, womit die restlichen Anlagenteile im Wesentlichen adaptierungsfrei, einfach und kostengünstig weiterverwendet werden können.

Die Förderschnecke 4 ist als im Wesentlichen zylindrisches Bauteil mit einer zentralen Welle und einer schraubenlinienförmigen Schneckenfläche 41 mit einer Steigung zur Förderung der Biomasse in Richtung der außenseitig zum Lagerraum 2 angeordneten Teilen des Austragungssystems 1 ausgebildet und weist üblicherweise eine Länge zwischen 1m und 12m auf. Die Schneckenfläche 41 ist radial nach außen vom Außendurchmesser der Förderschnecke 4, welcher üblicherweise zwischen 30mm und 200mm beträgt, begrenzt, wobei der Außendurchmesser über die Länge der Förderschnecke 4 im Wesentlichen variieren, insbesondere abgesetzt variieren, kann. Insbesondere kann die Förderschnecke 4 im vorderen Endbereich, welcher zur Anordnung im Lagerraum 2, insbesondere im Bereich der Mitte des Lagerraumbodens 21, vorgesehen ist, der Außendurchmesser der Förderschnecke 4 kleiner sein als im hinteren Endbereich, welcher zur Anordnung im Förderkanal 11 vorgesehen ist. Dadurch kann die zuverlässige Förderung von Biomasse im Lagerraum und in Richtung des Förderkanals 11 gewährleistet sein.

Bevorzugt - und wie gemäß der ersten und zweiten bevorzugten Ausführungsform des Austragungssystems 1 vorgesehen - kann eine Längsmittelachse der Förderschnecke 4 im Wesentlichen lagefest angeordnet sein. Dabei kann die Förderschnecke 4 am vorderen Endbereich insbesondere am Winkelgetriebe 5 und am hinteren Endbereich insbesondere im Bereich des Förderkanals 11 lagefixiert sein. Dies ermöglicht die einfache und kostengünstige im Wesentlichen freiliegende Anordnung der Förderschnecke 4 im Lagerraum 2 und kann - in Betriebslage des Austragungssystems 1 gesehen - ein Verschieben der Förderschnecke 4 und insbesondere ein Verdrehen der Förderschnecke 4 und der Längsmittelachse der Förderschnecke 4 um das Winkelgetriebe 5 zuverlässig verhindern.

Insbesondere kann vorgesehen sein, dass die Förderschnecke 4 als eine Vor-Ort ablängbare Standardförderschnecke ausgebildet ist. Vorteilhaft dabei ist, dass dabei auf Einzelanfertigungen von Förderschnecken 4 verzichtet werden kann und somit die Kosten bei Herstellung gering sind. Vorteilhaft dabei ist ebenso, dass die als Standardförderschnecke ausgebildete Förderschnecke 4 mit vorbestimmter Überlänge zum Bestimmungsort angeliefert werden kann und Vor-Ort auf die Einbaulänge abgelängt werden kann, wodurch Abweichungen der tatsächlichen Lagerraumabmessungen von den planmäßigen Lagerraumabmessungen ausgeglichen und somit verhindert werden, dass eine mit planmäßiger Länge vorfabrizierte Förderschnecke 4 nachträglich nachgebessert, längenkorrigiert oder ausgetauscht werden muss.

Vorteilhafterweise kann die Steigung der Schneckenfläche 41 von dem vorderen Endbereich der Förderschnecke 4 in Richtung dem hinteren Endbereich der Förderschnecke 4 zunehmen, womit auch bei einem Zerreiben der Biomasse diese zuverlässig und ohne einem Verstopfen des Austragungssystems 1 gefördert werden kann.

Bei anderen Ausführungsformen der Förderschnecke 4 kann diese kegelförmig oder kegelstumpfförmig ausgebildet sein und derart kann die Förderschnecke 4 einen stetigen, variierenden Außendurchmesser aufweisen, wobei der Durchmesser der zentralen Welle entlang der Längserstreckung der Förderschnecke 4 im Wesentlichen konstant oder variierend ausgebildet sein kann.

In vorteilhafter Weiterbildung kann die Förderschnecke 4 freiliegend im Lagerraum 2 angeordnet sein, wobei kein Kanal im Bereich der Förderschnecke 4 ausgebildet ist, also wobei der Innenraum des Lagerraums 2 förderschneckenkanalfrei ausgebildet sein kann. Die Förderschnecke 4 kann dabei in Richtung der im Wesentlichen horizontalen Ebene insbesondere derart freiliegend angeordnet sein, dass die Förderschnecke 4 unterhalb des Rührwerkes 3 förderschneckenkanalfrei, also nicht innerhalb eines Förderschneckenkanals, angeordnet ist, wie dies in Fig. 1 bis 4 dargestellt ist. Insbesondere kann dabei der Lagerraumboden 21 im Wesentlichen eben ausgebildet sein. Besonders vorteilhaft hat sich bei dem Austragungssystem 1 gemäß der ersten Ausführungsform und der zweiten Ausführungsform gezeigt, dass die Biomasse zuverlässig mit der freiliegenden Förderschnecke 4 gefördert, also ausgetragen, werden kann.

Freiliegend bedeutet in diesem Zusammenhang, dass die Förderschnecke 4 nicht in einem Kanal liegt, sondern frei im Lagerraum 2 liegt. Derart kann der Lagerraum 2 ohne einem Kanal zur Aufnahme der Förderschnecke 4, also kanalfrei, ausgebildet, womit der Totraum im Lagerraum 2 und die Herstellungskosten des Lagerraums 2 gering sein können. Die, insbesondere bodennahe, Förderschnecke 4 kann sich derart im Heizmaterial, also in der Biomasse, also bevorzugt Holzpellets, Hackschnitzel und/oder Biomassegranulat, frei drehen.

Vorteilhaft dabei ist, dass die Förderschnecke 4 nicht auf einen Kanal abgestimmt sein muss, womit eine vorteilhafte Ausführungsform der Förderschnecke 4 für unterschiedliche Geometrien und unterschiedliche Größen des Lagerraums 2 geeignet ist. Dadurch kann eine standardisierte Förderschnecke 4 Vor-Ort auf die benötigte Länge zugeschnitten und verbaut werden. Dadurch können teuere Einzelanfertigungen der Förderschnecken 4 vermieden, sowie der Herstellungsaufwand und die Herstellungskosten der Lagereinrichtung 7 gesenkt werden.

Vorteilhaft dabei ist ebenso, dass - aufgrund des Fehlens des Kanales im Innenraum des Lagerraums 2 - zuviel von der Förderschnecke 4 geförderte Biomasse seitlich und nach oben im Wesentlichen frei abgleiten kann. Dadurch kann ein Verstopfen des Förderkanals 11, in welchem die Übergabe der Biomasse vom Lagerraum 1 zu den außerhalb des Lagerraums befindlichen Teilen des Austragungssystems erfolgt, insbesondere im Wesentlichen selbstregulierend, verhindert sein. Derart kann die Steuerung der Förderung der Biomasse vom Lagerraum 2 zur Biomassefeuerung einfach und zuverlässig erfolgen.

In Sicht von oben, kann der Lagerraum 2 - wie in Fig. 2 und 4 dargestellt - im Wesentlichen rechteckig, insbesondere quadratisch ausgebildet sein und kann vier Lagerraumseitenwände 22 umfassen.

Bei anderen, nicht dargestellten, Ausführungsformen des Lagerraums 2 kann dieser - in der Sicht von oben gesehen rund, oval, oder mehreckig, insbesondere sechseckig oder achteckig ausgebildet sein und kann eine oder mehrere, insbesondere sechs oder acht, Lagerraumseitenwände 22 umfassen.

Der Lagerraumboden 21 des Lagerraumes 2 kann - wie in Fig. 1 und 3 dargestellt - im Wesentlichen eben, waagrecht und im Wesentlichen parallel zum Rührwerk 3, insbesondere zu den Rührwerksarmen 32, ausgebildet sein.

Die maximale überstrichene Fläche 33 der Rührwerksarme 32 kann im Wesentlichen lediglich geringfügig kleiner als ein Innkreis der Lagerraumseitenwände 22 des Lagerraums 2 ausgebildet sein. Die vom Rührwerk 3 - bei dessen Rotation um die Hauptdrehachse 31 - nicht überstriche Fläche kann derart gering und die Entleerung des Lagerraumes kann derart hoch sein.

Die maximale überstrichene Fläche 33 der Rührwerksarme 32 kann größer als der Innkreis der, den Innenraum des Lagers seitlich begrenzenden, Lagerraumseitenwände 22 ausgebildet sein. Dadurch kann gewährleistet sein, dass die Rührwerksarme 2 bei dessen - insbesondere langsamen - Bewegung auch in Ecken 23 des Lagerraumes reichen und auch dort die Entleerung des Lagerraumes 2 gewährleistet sein kann. Dadurch kann das für den Benutzer nutzbare Volumen, also das Netto-Lagerraumvolumen, besonders hoch ausgebildet sein.

Insbesondere in diesem Zusammenhang kann der Rührwerksarm 32 mit einer freien Rührwerksarmspitze, welche besonders hohe Verformbarkeit aufweist, ausgebildet sein, damit die Lagerraumseitenwände 22 dauerhaft an deren Kontaktstellen mit der freien Rührwerksarmspitze nicht beschädigt werden. Dies kann bei einer vorteilhaften Ausführungsform des Rührwerksarms 32 durch eine Kombination aus dem Federblatt und aus dem federzugbetätigten Gelenkarm gewährleistet werden, wobei die freie Rührwerksarmspitze, welche ein freies Ende 38 des Rührwerkarms 32 ausbildet, anstatt aus Stahl auch aus einem Kunststoff, insbesondere einem Thermoplast und/oder einem Elastomer, ausgebildet sein kann.

In vorteilhafter Weiterbildung kann vorgesehen sein, dass der zumindest eine Rührwerksarm 32 an dessen freiem Ende 38, insbesondere an der freien Rührwerksarmspitze, reibungsminimierend, insbesondere als Gleitfläche, bevorzugt als eine im Wesentlichen um die Lotrechte drehbar gelagerte Rolle, ausgebildet ist. Dadurch kann der Abrieb der - beispielsweise gemäß der Fig. 1 bis 4 vier - Lagerraumseitenwände 22 bei dem Entlanggleiten der des freien Endes des sich drehenden Rührwerksarms 32 besonders gering sein. Vorteilhaft dabei ist, dass dabei wenig Reibung auftritt und somit die Belastung des Rührwerks 3 und des Antriebs des Rührwerks 3 gering ist. Insbesondere kann dabei die notwenige Antriebsleistung des Rührwerks gering gehalten werden.

Das in der ersten und zweiten bevorzugten Ausführungsform des Austragungssystems verwendete Rührwerk 3 umfasst weiters eine zentrale Rührwerkabdeckung 34 und eine zentrale Rührwerkscheibe 35, welche im Bereich der Hauptdrehachse 31 und - in Gebrauchslage des Austragungssystems 1 gesehen - oberhalb des Winkelgetriebes 5 ausgebildet sind. Die Rührwerkabdeckung 34 und die zentrale Rührwerkscheibe 35 verhindern ein Eindringen von Biomasse in das Winkelgetriebe 5, womit das Winkelgetriebe 5 insbesondere im Wesentlichen wartungsfrei ausgebildet sein kann.

Die Erfindung betrifft weiters eine Lagereinrichtung zur Lagerung von Biomasse in einem Lagerraum 2 für die Befeuerung einer Biomassefeuerung, in welcher ein Austragungssystem 1 gemäß einer der bevorzugten Ausführungsformen oder einer weiteren erfindungsgemäßen Ausführungsform ausgebildet ist.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Austragungssystem (1) zur Förderung von Biomasse aus einem Lagerraum (2) in eine Biomassefeuerung, wobei das Austragungssystem (1) ein Rührwerk (3), mit einer Hauptdrehachse (31), zur wenigstens bereichsweise bodennahen Anordnung umfasst, **dadurch gekennzeichnet, dass** die Hauptdrehachse (31) des Rührwerkes (3) im Wesentlichen lotrecht angeordnet ist, und dass - in Gebrauchslage des Austragungssystems (1) gesehen - unter dem Rührwerk (3) eine Förderschnecke 4 wenigstens in Richtung einer im Wesentlichen horizontalen Ebene freiliegend angeordnet ist.

2. Austragungssystem nach Anspruch 1, **dadurch gekennzeichnet, dass** die Förderschnecke (4) und das Rührwerk (3) mittels eines Winkelgetriebes (5) wirkverbunden sind, und dass das Rührwerk (3) an dem Winkelgetriebe (5) gelagert ist und mittels der Förderschnecke (4) antreibbar ist.

3. Austragungssystem nach einem der Ansprüche 1 bis 2, **dadurch gekennzeichnet, dass** die Förderschnecke (4) als eine Vor-Ort ablängbare Standardförderschnecke ausgebildet ist.

4. Austragungssystem nach nach einem der Ansprüche 1 bis 3, **dadurch gekennzeichnet, dass** ein Gehäuse (51) des Winkelgetriebes (5) zur zumindest bereichsweise bodennahen Anordnung des Rührwerkes (3) und zur Rotation des Rührwerkes (3) um die im Wesentlichen lotrechte Hauptdrehachse (31) ausgebildet ist.

5. Austragungssystem nach einem der Ansprüche 1 bis 4, **dadurch gekennzeichnet, dass** das Rührwerk (3) zumindest einen Rührwerksarm (32) aufweist.

6. Austragungssystem nach Anspruch 5, **dadurch gekennzeichnet, dass** der zumindest eine Rührwerksarm (32) als Federblatt und/oder als federzugbetätigter Gelenkarm ausgebildet ist.

7. Austragungssystem nach Anspruch 4, 5 oder 6, **dadurch gekennzeichnet, dass** der zumindest eine Rührwerksarm (32) an dessen freiem Ende (38) reibungsminimierend, insbesondere als Gleitfläche, bevorzugt als eine im Wesentlichen um die Lotrechte drehbar gelagerte Rolle, ausgebildet ist.

8. Austragungssystem nach einem der Ansprüche 4 bis 7, **dadurch gekennzeichnet, dass** - in Gebrauchslage des Austragungssystems (1) gesehen - der vertikale Abstand einer Unterkante des Rührwerkarmes (32) zur Unterkante des Gehäuses (51) des Winkelgetriebes (5) das 1,1fache bis 3fache, insbesondere das 1,2fache bis 2,4fache, bevorzugt das 1,3fache bis 1,8fache des Außendurchmessers der Förderschnecke (4) beträgt.

9. Austragungssystem nach einem der Ansprüche 1 bis 8, **gekennzeichnet durch** einen ersten Motor (6) zum Antreiben des Rührwerks (3).

10. Austragungssystem nach Anspruch 9, **dadurch gekennzeichnet, dass** der erste Motor (6) zur Anordnung außerhalb des Lagerraums (2) vorgesehen ist und dass der erste Motor (6), die Förderschnecke (4) und das Winkelgetriebe (5) zum Übertragen des Drehmomentes des ersten Motors (6) auf das Rührwerk (3) miteinander wirkverbunden sind.

11. Austragungssystem nach einem der Ansprüche 1 bis 10, **dadurch gekennzeichnet, dass** das Austragungssystem (1) wenigstens einen Förderkanal (11), zur bereichsweisen Aufnahme der Förderschnecke (4), und eine, vorzugsweise als Knickschneckenfördervornchtung (13) und/oder als Saugfördervorrichtung (14) ausgebildete, Fördereinrichtung (12) umfasst.

12. Lagereinrichtung (7) zur Lagerung von Biomasse in einem Lagerraum (2) für die Befeuerung einer Biomassefeuerung, **dadurch gekennzeichnet, dass** die Lagereinrichtung (7) ein Austragungssystem (1) nach einen der Ansprüche 1 bis 11 umfasst.

13. Verfahren zur Förderung von Biomasse in eine Biomassefeuerung aus einem Lagerraum (2), **dadurch gekennzeichnet, dass** die Biomasse im Lagerraum (2) über der Förderschnecke (4) mittels eines, im Wesentlichen waagrecht wirkenden und zumindest bereichsweise bodennah zu einem Lagerraumboden (21) ausgebildeten, Rührwerks (3) bewegt wird und dass die Biomasse mittels einer, im Lagerraum (2) zwischen dem Rührwerk (3) und dem Lagerraumboden (21), insbesondere im Wesentlichen waagrecht, angeordneten sowie in Richtung einer im Wesentlichen horizontalen Ebene freiliegenden, Förderschnecke (4) aus dem Lagerraum (2) ausgetragen wird.

14. Verfahren nach Anspruch 13, **dadurch gekennzeichnet, dass** ein als federzugbetätigter Gelenkarm oder als Federblatt ausgebildeter Rührwerksarm (32) bei einer vollständigen Rotation eine gewichtsbelastungsabhängig vorgebbare Fläche (33) überstreicht, wobei bei einer geringen Gewichtsbelastung des Rührwerksarmes (32) dieser eine große Fläche und bei einer großen Gewichtsbelastung des Rührwerksarmes (32) dieser eine geringe Fläche überstreicht.

15. Verfahren nach Anspruch 13 oder 14, **dadurch gekennzeichnet, dass** die Biomasse von der Förderschnecke (2) zu einem eine Lagerraumseitenwand (22) durchbrechenden Förderkanal (11), vom Förderkanal (11) zu einer Fördereinrichtung (12) und von der Fördereinrichtung (12) in die Biomassefeuerung gefördert wird.
